# EUROPEAN PATENT APPLICATION

(11) **EP 2 768 268 A1**
(43) Date of publication of application: **20.08.2014**
(21) Application number: 11873830.1
(22) Date of filing: 13.10.2011
(51) Int. Cl.: H04W 72/08, H04W 92/20

(54) **WIRELESS COMMUNICATION SYSTEM, BASE STATION, AND WIRELESS COMMUNICATION METHOD**

(71) Applicant: Fujitsu Limited, Kawasaki-shi, Kanagawa 211-8588 (JP)
(72) Inventor: EZAKI, Takato, Kawasaki-shi Kanagawa 211-8588 (JP)
(74) Representative: Cooper-Rolfe, Elizabeth Louise
(86) International application number: PCT/JP2011/073567
(87) International publication number: WO 2013/054417

(57) **Abstract**

A radio communication system (1) includes a base station (10) and a base station (20) that communicate with a mobile station (30). The base station (10) includes a network terminal unit that transmits a result of resource assignment relative to the mobile station (30) to the base station (20). The base station (20) includes another network terminal unit and a scheduling unit. The other network terminal unit receives the result of the resource assignment performed by the base station (10) and transmitted by the network terminal unit. The scheduling unit identifies a resource suffering interference from the mobile station (30) among resources assignable by the base station (20) based on the result of the resource assignment and stops assignment of the resource relative to the mobile station (30).

## Description

### [Technical Field]

The present invention relates to a radio communication system, a base station, and a radio communication method.

### [Background Art]

With the development of radio communication technology, a changeover has been made to a radio communication network with higher communication speed. For example, a migration from a third generation (3G) network to a long time evolution (LTE) network has been rapidly implemented in recent years. The LTE performs resource assignment by time sharing. This may result in narrow coverage (communicable range) of voice calling as compared with a system in which resources are uniformly assigned over time, such as wideband code division multiple access (W-CDMA). To solve this disadvantage, the LTE employs transmission time interval (TTI) bundling. The TTI bundling regards a plurality of successive TTIs used in transmission of audio data as a single TTI to increase energy density and enables coverage equivalent to the W-CDMA.

### [Citation List]

### [Non Patent Citation]

Patent Document 1: Japanese Laid-open Patent Publication No. 2007-151146
Patent Document 2: Japanese Laid-open Patent Publication No. 2011-049987
Patent Document 3: International Publication Pamphlet No. WO 2006/085359
Patent Document 4: Japanese National Publication of International Patent Application No. 2010-534997 [Non Patent Citation]
Non Patent Document 1: R1-074990, On the Need for VoIP Coverage Enhancement for the E-UTRA UL, Alcatel-Lucent
Non patent Document 2: TS36.213, Evolved Universal Terrestrial Radio Access (EUTRA); "Physical layer procedures", 3GPP
Non patent Document 3: TS36.321, Evolved Universal Terrestrial Radio Access (EUTRA); "Medium Access Control (MAC) protocol specification", 3GPP

### [Summary of Invention]

### [Technical Problem]

The TTI bundling, however, has the following disadvantages. The use of the TTI bundling increases transmission opportunities of audio data to a base station from a mobile station positioned at the edge of the cell of the base station. The transmission power of the mobile station causes interference to neighboring other cells. This interference is typically prominent at a cell edge where the transmission power of the mobile station is large. As a result, the interference in a radio communication system to which the TTI bundling is applied increases particularly at a cell edge as compared with the case where no TTI bundling is applied. This reduces the capacity efficiency of the whole system and the throughput between the base station and the mobile station.

In view of the above-described disadvantages, it is an object of the disclosed technique to provide a radio communication system, a base station, and a radio communication method that enable coverage extension together with interference reduction.

### [Solution to Problem]

To solve the above problem and attain the object, a radio communication system disclosed in this application, according to an aspect, includes a first base station that communicates with a mobile station and a second base station. The first base station includes a transmitting unit. The transmitting unit transmits a result of resource assignment relative to the mobile station to the second base station. The second base station includes a receiving unit and a controller. The receiving unit receives the result of the resource assignment performed by the first base station and transmitted by the transmitting unit. The controller identifies a resource suffering interference from the mobile station among resources assignable by the second base station based on the result of the resource assignment and stops assignment of the resource relative to the mobile station.

### [Advantageous Effects of Invention]

An embodiment of the radio communication system disclosed in the subject application provides an effect to enable coverage extension together with interference reduction.

### [Brief Description of Drawings]

FIG. 1 is a schematic illustrating the configuration of a radio communication system.
FIG. 2 is a block diagram illustrating the functional configuration of base stations 10, 20 according to first and second embodiments.
FIG. 3 is a block diagram illustrating the hardware configuration of the base stations 10, 20.
FIG. 4 is a flowchart for explaining cell edge determination processing executed by the base station 10.
FIG. 5 is a flowchart for explaining the operation of the base station 10.
FIG. 6 is a graph illustrating the state of radio resources allocated by audio scheduling processing.
FIG. 7 is a flowchart for explaining the audio scheduling processing executed by the base station 10 according to the first embodiment.
FIG. 8 is a table listing an example of the execution result of the audio scheduling processing.
FIG. 9 is a flowchart for explaining radio resource allocation processing executed by the base station 20 according to the first embodiment.
FIG. 10 is a flowchart for explaining base station determination processing for interference reduction, executed by the base station 10 according to a first modification.
FIG. 11 is a flowchart for explaining interference reduction feasibility determination processing executed by the base station 20 according to a second modification.
FIG. 12 is a flowchart for explaining marking processing of a target resource for interference reduction, executed by the base station 20 according to the second embodiment.
FIG. 13 is a flowchart for explaining assignment processing of the target resource for interference reduction to another mobile station, executed by the base station 20 according to the second embodiment.
FIG. 14 is a block diagram illustrating the functional configuration of the base station 10 according to a third embodiment.
FIG. 15 is a block diagram illustrating the configuration of a decoding unit of the base station 10 according to the third embodiment.
FIG. 16 is a graph illustrating a situation in which the reception timings of demodulated signals delay, in the base station 10 according to the third embodiment.

### [Embodiments for Carrying Out the Invention]

Embodiments of the radio communication system, the base station, and the radio communication method disclosed in the subject application are described in detail with reference to the accompanying drawings. The radio communication system, the base station, and the radio communication method disclosed in the subject application are not limited to these embodiments.

### First Embodiment

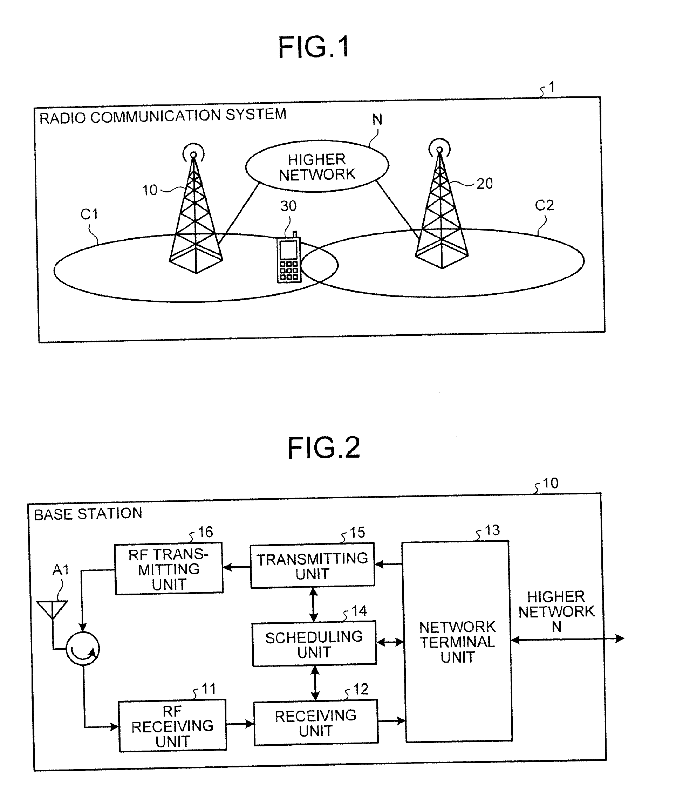

The following describes the configuration of a radio communication system according to a first embodiment disclosed in the subject application. FIG. 1 is a schematic illustrating the configuration of this radio communication system 1. As illustrated in FIG. 1, the radio communication system 1 is a system to which the LTE is applied as a radio communication system and includes a base station 10, a base station 20, and a mobile station 30 to be described later. The base station 10 and the base station 20 form a cell C1 and a cell C2, respectively, and perform time sharing communication of audio data in the upstream direction, with mobile stations. The base station 10 and the base station 20 are connected by a wire directly, or indirectly through a higher network N, to enable mutual transmission and reception of signals and data. The mobile station 30 is a cellular phone positioned at the edge of the cell C1 as well as near the boundary between the cells C1, C2. The mobile station 30 can perform radio communication with each of the base stations 10, 20 and transmits audio data to the base station 10 out of these base stations.

FIG. 2 is a block diagram illustrating the functional configuration of the base station 10. As illustrated in FIG. 2, the base station 10 includes a radio frequency (RF) receiving unit 11, a receiving unit 12, a network terminal unit 13, a scheduling unit 14, a transmitting unit 15, and an RF transmitting unit 16. These components are connected to enable input and output of signals and data unidirectionally or bidirectionally.

The RF receiving unit 11 performs carrier wave removal and analog-to-digital (AD) conversion on a signal in the upstream direction received through an antenna A1 to generate a received baseband signal. The receiving unit 12 performs demodulation and decoding based on scheduling information, on the received baseband signal input from the RF receiving unit 11 to generate received data. The receiving unit 12 outputs the generated received data to the network terminal unit 13 and the scheduling unit 14. The receiving unit 12 also determines whether each mobile station including the mobile station 30 is positioned at the edge of the cell C1 based on an estimated value of transmission loss. The network terminal unit 13 connects the base station 10 and the higher network N such as a core network. The network terminal unit 13 outputs data in the downstream direction received from the higher network N to the transmitting unit 15 and transmits data in the upstream direction input from the receiving unit 12 to the higher network N.

The scheduling unit 14 assigns radio resources based on information such as channel quality input from the receiving unit 12 and the transmitting unit 15 to be described later and then provides notification of the scheduling information to the receiving unit 12 and the transmitting unit 15. The scheduling unit 14 executes audio scheduling for a given time on the mobile station 30 determined to be positioned at a cell edge by the receiving unit 12 to allocate resources for the mobile station 30 collectively. The scheduling unit 14 then provides an instruction for transmission of an interference reduction request including the result of the audio scheduling, to the transmitting unit 15. The transmitting unit 15 encodes and modulates the data in the downstream direction based on the scheduling information input from the scheduling unit 14 to generate a downstream baseband signal. The RF transmitting unit 16 performs digital-to-analog (DA) conversion and carrier wave modulation on the downstream baseband signal input from the transmitting unit 15 to generate a transmission signal and transmits the signal to the mobile station 30 through the antenna A1.

The functional configuration of the base station 10 is described above. The functional configuration of the other base station 20 is the same with that of the base station 10. The common components thus employ like reference numerals, and the detailed description thereof is omitted.

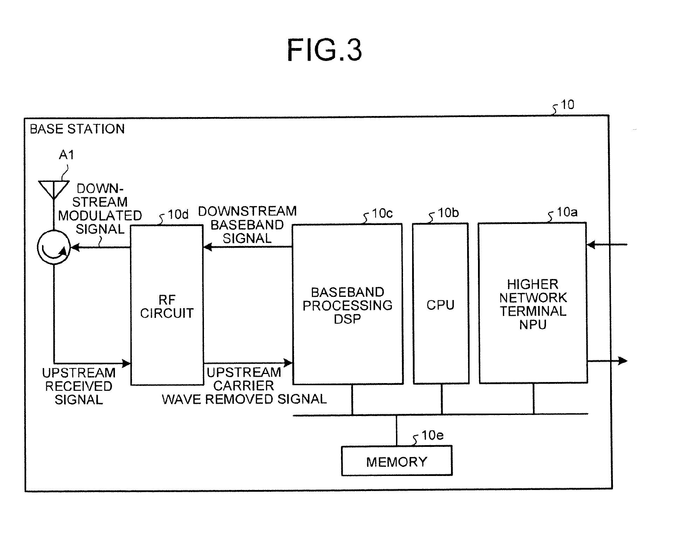

FIG. 3 is a block diagram illustrating the hardware configuration of the base station 10. As illustrated in FIG. 3, the base station 10 includes a higher network terminal network processing unit (NPU) 10a, a central processing unit (CPU) 10b, a baseband processing digital signal processor (DSP) 10c, an RF circuit 10d, and a memory 10e are connected through a bus to enable input and output of various signals and data. The RF circuit 10d includes the antenna A1. The memory 10e includes a random-access memory (RAM) such as a synchronous dynamic random access memory (SDRAM), a read-only memory (ROM), and a flash memory.

The RF receiving unit 11 and the RF transmitting unit 16 of the base station 10 illustrated in FIG. 2 are implemented by the RF circuit 10d as hardware. The receiving unit 12, the scheduling unit 14, and the transmitting unit 15 are implemented by the baseband processing DSP 10c as hardware. The network terminal unit 13 is implemented by the higher network terminal NPU 10a. The hardware configuration of the base station 10 is described above. The configuration of the base station 20 is physically the same with that of the base station 10. The common components thus employ like reference numeral endings, and the detailed description thereof is omitted.

The following describes the operation of the radio communication system 1. As illustrated in FIG. 1, in the radio communication system 1, the mobile station 30 is positioned near the boundary between the cells C1, C2 formed by the base stations 10, 20. The base station 20 thus suffers interference from the mobile station 30 every time the mobile station 30 transmits audio data to the base station 10. To solve such disadvantages, the radio communication system 1 executes processing to be described below.

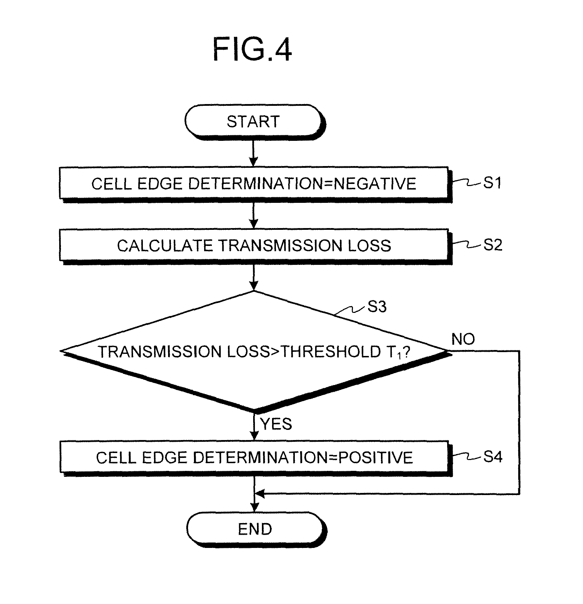

The base station 10 determines whether the mobile station 30 is positioned at the edge of the cell C1 to determine whether to implement interference reduction. FIG. 4 is a flowchart for explaining cell edge determination processing executed by the base station 10. In the initial state, "negative" is set as a cell edge determination result (S1). In this state, the baseband processing DSP 10c (simply called the "DSP 10c", hereinafter) calculates transmission loss. The DSP 10c calculates the transmission loss at the base station 10 from the difference (in dB units) between transmission power from the mobile station 30 to the base station 10 that is informed from the mobile station 30 and actual reception power by the base station 10 (S2). At S3, the DSP 10c compares the value of transmission loss calculated at S2 with a given threshold T₁. If a relation of transmission loss > threshold T₁ is satisfied (Yes at S3), the system shifts to processing at S4. At S4, the DSP 10c determines that the mobile station 30 is positioned away from the base station 10 (that is, at the edge of the cell C1) because the transmission loss of the mobile station 30 is large. In contrast, as a determination result at S3, if a relation of transmission loss ≤ threshold T₁ is satisfied (No at S3), the DSP 10c omits the processing at S4 and ends a series of cell edge determination processing.

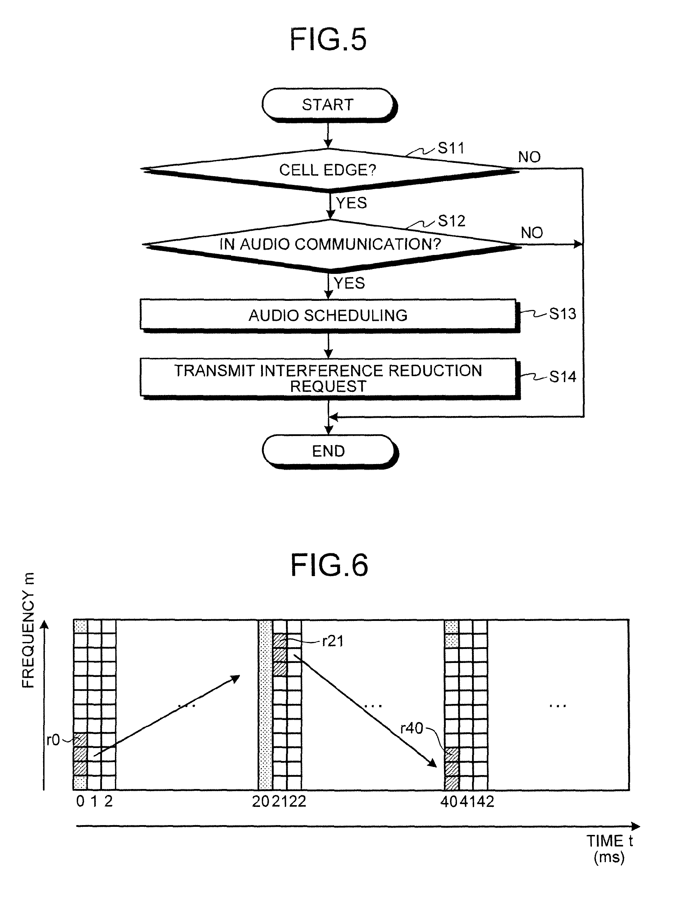

The following describes the operation of the base station 10 with reference to FIG. 5. FIG. 5 is a flowchart for explaining the operation of the base station 10. At S11, the DSP 10c determines whether the mobile station 30 is positioned at the edge of the cell C1 in the cell edge determination processing described above. As a result of the determination, if the mobile station 30 is positioned at the edge of the cell C1 (Yes at S11), the DSP 10c determines whether the mobile station 30 is communicating through voice calling (S12). As a result of the determination, if the mobile station is in audio communication (Yes at S12), audio scheduling is executed for a scheduling period T_{SCD} determined in advance for the mobile station 30 (S13). The DSP 10c then provides to the higher network terminal NPU 10a, an instruction for transmission of an interference reduction request to the base station 20 forming the neighboring cell C2, and the higher network terminal NPU 10a transmits the request to the base station 20 (S14). This interference reduction request includes besides the result of the audio scheduling processing at S13, an identification number unique to the base station 10 as a requestor.

In contrast, if the determination result at S11 or S12 is negative (No at S11 or No at S12), the DSP 10c omits the processing at both of S13 and S14 and ends a series of operations.

FIG. 6 is a graph illustrating the state of radio resources allocated by the audio scheduling processing described above. In FIG. 6, the x axis indicates a time t (ms) and the y axis indicates a frequency m. The audio scheduling processing is executed by allocating free resources in a period of 20 ms that is the interval of each audio frame. For example, as illustrated in FIG. 6, on a timing at 0 ms, three free resources r0 are allocated at a predetermined position as resources (shaded portions) for interference reduction during audio data reception, and on a timing 20 ms after the timing, three free resources r21 are allocated. On a timing at 40 ms that is further 20 ms after the timing, three free resources r40 are allocated for interference reduction. The period for allocating resources is not always needed to be 20 ms and allows about 2 to 5 ms delays. The period is, however, never less than 20 ms.

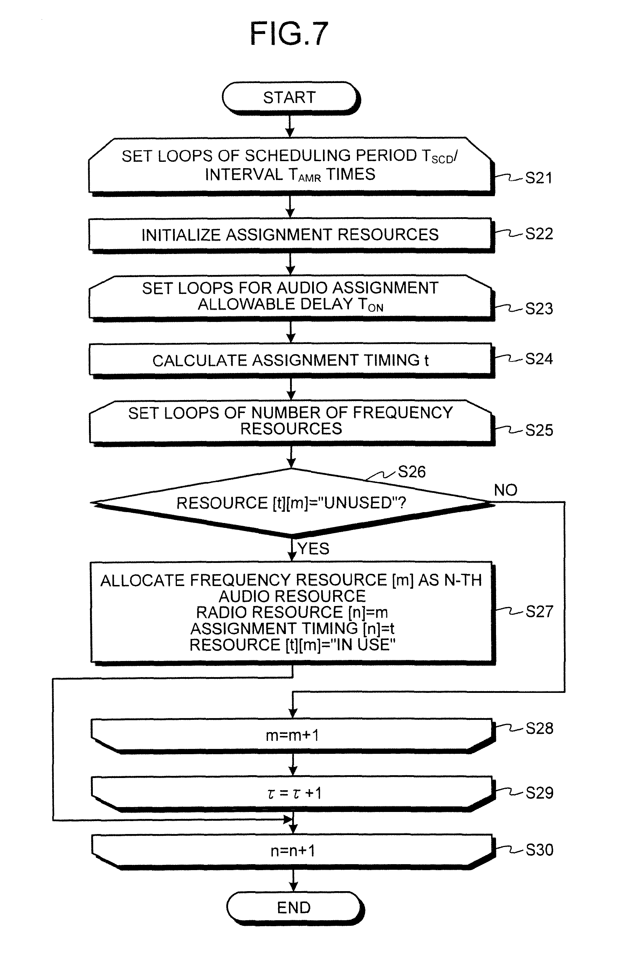

The following describes the audio scheduling processing executed by the base station 10 with reference to FIG. 7. FIG. 7 is a flowchart for explaining the audio scheduling processing executed by the base station 10. At S21, the DSP 10c divides the scheduling period T_{SCD} by an interval T_{AMR} of each audio frame to set the value n of the number of loops. For example, when T_{SCD} = 100 ms and T_{AMR} = 20 ms are satisfied, T_{SCD}/T_{AMR} = 100 ms/20 ms = 5 is satisfied to set five loops (n = 0 to 4). At S22, the DSP 10c initializes assignment resources. This sets null (invalid values) as the initial values of radio resources [n] and assignment timing [n] that employ the value n as a parameter.

At S23, the DSP 10c sets the number τ of loops for audio assignment allowable delay (number of times) T_{ON}. For example, when the audio assignment allowable delay occurs three times in the scheduling period T_{SCD}, three loops (τ = 0 to 2) are set. At S24, the DSP 10c calculates a timing for radio resource assignment as an assignment timing t. The timing t is calculated from t = n x T_{AMR} + τ. Similarly at S25, the DSP 10c sets the number m of loops for frequency resources. For example, when 100 of the frequency resources exist in the scheduling period T_{SCD}, a hundred of loops (m = 0 to 99) are set.

At S26, the DSP 10c determines the resource usage condition at a resource [t][m], and if the condition is "unused" (Yes at S26), the system shifts to processing at S27. At S27, the DSP 10c allocates a frequency resource [m] as an n-th audio resource and sets "m" in the radio resource [n] and "t" in the assignment timing [n] to update the usage condition of the resource [t][m] to "in use".

At S27, although the DSP 10c allocates audio resources in ascending order of the value of m of the frequency resources, the assignment order of audio resources is not always needed to be in ascending order of m. For example, in each assignment, the DSP 10c may change the positions of the frequency resources to which audio resources are assigned, according to certain criteria or optionally. This enables the base station 10 to obtain frequency diversity effects.

In contrast, at S26, if the resource usage condition at the resource [t][m] is already "in use" (No at S26), the DSP 10c increments the current value of m by 1 to make m = m + 1 (S28). Similarly for the value of τ, the DSP 10c increments the current value of τ by 1 to make τ = τ + 1 (S29). After the completion of the processing at S27 or S29, the DSP 10c increments the current value of n by 1 to make n = n + 1 (S30). As a result, a series of processing from S25 to S28 is repeatedly executed m times, and a series of processing from S23 to S29 is repeatedly executed τ times. When a series of processing from S21 to S30 has been repeatedly executed n times, the audio scheduling processing described above ends.

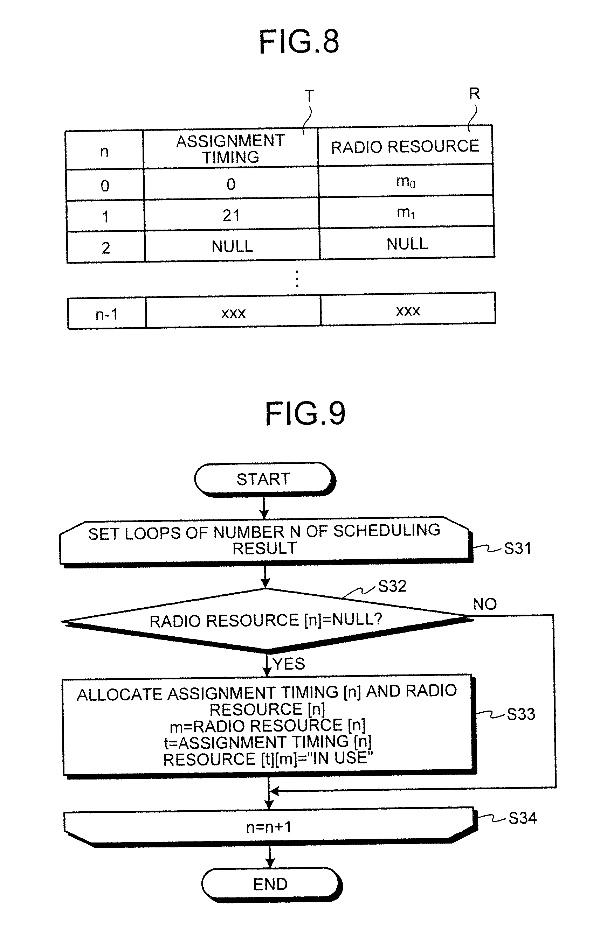

FIG. 8 is a table listing an example of the execution result of the audio scheduling processing. As listed in FIG. 8, the base station 10 executes the audio scheduling processing to obtain a pair of n (= T_{SCD}/T_{AMR}) assignment timings T (0, 21, and so on) and n radio resources R (m₀, m₁, and so on), as a result of the audio scheduling in the scheduling period T_{SCD}. In FIG. 8, on a timing (n = 2) at which radio resources cannot be allocated, "null" is set both in the assignment timing and the radio resource to indicate unsuccessful radio resource assignment.

For assignable radio resources, the DSP 10c provides to the RF circuit 10d, an instruction for transmission of a control signal through a physical dedicated control channel (PDCCH) on the corresponding assignment timing.

The following describes the operation of the base station 20 neighboring the base station 10. When the base station 20 receives the interference reduction request transmitted from the base station 10 at S14 in FIG. 5, a baseband processing DSP 20c (simply called the "DSP 20c", hereinafter) executes radio resource allocation processing. FIG. 9 is a flowchart for explaining radio resource allocation processing executed by the base station 20 according to the first embodiment. At S31, the DSP 20c sets the number of scheduling results in the number N of loops. This sets loops of n = 0 to N - 1. At S32, the DSP 20c determines the resource setting condition at a radio resource [n], and if the condition is "null" (Yes at S32), the system shifts to processing at S33. At S33, the DSP 20c allocates the assignment timing [n] and the radio resource [n] and sets "m" in the radio resource [n] and "t" in the assignment timing [n] to update the usage condition of the resource [t][m] to "in use".

After the completion of processing at S33, or if radio resource [n] = "null" is not satisfied at S32 (No at S32), the DSP 20c increments the current value of n by 1 to update it to make n = n + 1 (S34). When a series of processing from S31 to S34 has been repeatedly executed n times, the radio resource allocation processing described above ends. For resources allocated by the base station 20 through the execution of the radio resource allocation processing, the base station 20 performs no assignment on the mobile station 30 to keep the resource usage condition at "unused". This reduces interference that the base station 20 suffers from the mobile station 30. The reception quality of the audio data received by the base station 10 from the mobile station 30 is favorably maintained. This results in enhancement of the coverage of the cell C1 and enhancement of throughput of the whole radio communication system 1.

The following describes a first modification as a modified embodiment of the first embodiment. The base station 10 receives information of cells neighboring the cell C1 or information with which the neighboring cells can be recognized, from the mobile station 30 positioned at the edge of the cell C1, and determines based on the information, base stations to which the interference reduction request is notified.

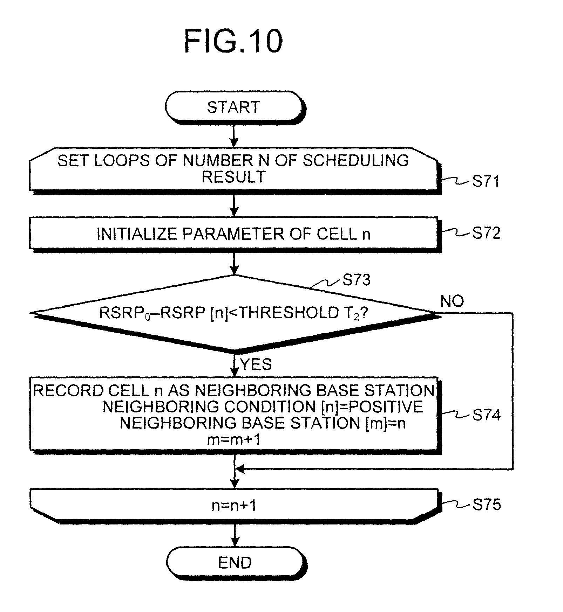

FIG. 10 is a flowchart for explaining base station determination processing for interference reduction, executed by the base station 10 according to the first modification. At S71, the DSP 10c sets the number n (= 0 to N-1) of loops for the number of cells whose reference signal received powers (RSRPs) are to be informed to the mobile station. At S72, the DSP 10c initializes the parameter of a cell n. This leads to the setting of "negative" as the initial value of a neighboring condition [n] and "0" as the initial value of m. At S73, the DSP 10c calculates difference between RSRP₀ of the cell C1 itself and RSRP [n] of the cell n initialized at S72 and compares the calculated value with a threshold T₂. As a result of the comparison, if RSRP₀ - RSRP [n] < threshold T₂ is satisfied (Yes at S73), the DSP 10c causes the memory 10e to record the current cell n as the cell of a neighboring base station. More precisely, the DSP 10c updates "negative" as the initial value of the neighboring condition [n] to "positive" and sets the value n in a neighboring base station [m]. The value m is incremented by 1 to be m + 1. After the completion of processing at S74, or if RSRP₀ - RSRP [n] ≥ threshold T₂ is satisfied at S73 (No at S73), the DSP 10c increments the current value of n by 1 to update it to make n = n + 1 (S75). When a series of processing from S71 to S75 has been repeatedly executed n times, the base station determination processing for interference reduction described above ends.

In such a manner, the base station 10 collects RSRP indicating reception level from a plurality of base stations including the base station 20 via the mobile station 30 in the cell C1 formed by the base station 10 itself. The base station with small difference in RSRP from the base station 10 has high reception level by the mobile station 30 positioned near the base station 10 and can be thus estimated to suffer strong interference from the mobile station 30. For this reason, the base station 10 selects the base station with small difference in RSRP from the base station 10 itself and determines the selected base station as a base station to be requested for interference reduction. The base station to which interference reduction is requested is thus limited to the base station with strong interference occurrence. As a result, interference reduction can be achieved more efficiently by narrowing down the base stations to the base station likely to be influenced by the interference. Furthermore, only resources that are highly needed to be unused for interference reduction are allocated as free resources among the resources assignable by each base station. This suppresses reduction in usage efficiency of resources. A plurality of base stations may be selected by the base station determination processing for interference reduction as base stations to be requested for interference reduction. The base stations do not necessarily neighbor the base station 10.

The following describes a second modification as a further modified embodiment of the first embodiment. When the amount of resources allocated according to the interference reduction request from the base station 10 exceeds a preset threshold T₃, the base station 20 provides notification of the excess to the base station 10 without performing interference reduction (without providing another free resource).

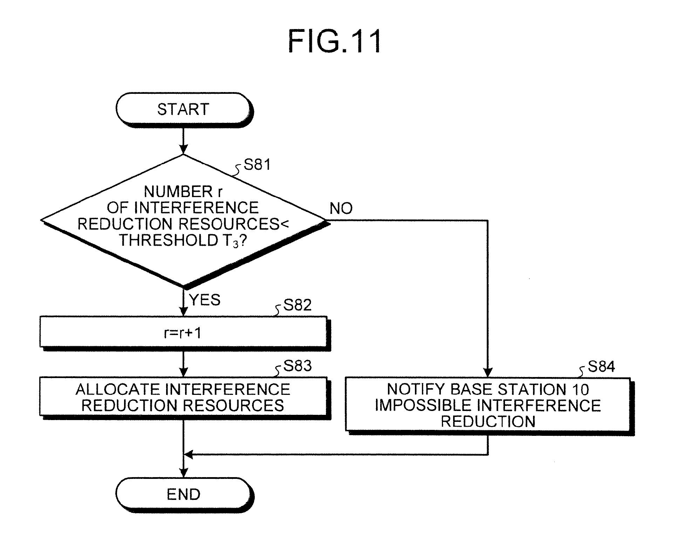

FIG. 11 is a flowchart for explaining interference reduction feasibility determination processing executed by the base station 20 according to the second modification. At S81, the DSP 20c compares the number r of interference reduction resources that is the number of resources currently allocated for interference reduction with the threshold T₃ set for denial determination. As a result of the comparison, if the number r of interference reduction resources < threshold T₃ is satisfied (Yes at S81), the base station 20 determines that allocatable resources still exist therein. The DSP 20c then increments r by 1 (S82) to allocate resources requested for interference reduction (S83). In contrast, as a result of the comparison, if the number r of interference reduction resources ≥ threshold T₃ is satisfied (No at S81), the base station 20 determines that free resources are no longer affordable therein. The DSP 20c then provides to the base station 10, notification that interference reduction is impossible, that is, resources requested for interference reduction cannot be allocated, through a higher network terminal NPU 20a (S84). In response to this, the interference reduction request from the base station 10 is rejected. The base station 10 to which the notification of the rejection of the interference reduction request is provided stops another interference reduction request to the base station 20 for a given time.

The base station 20 desirably allocates interference reduction resources as much as possible to minimize interference influence from the mobile station 30. The interference reduction resource allocation, however, increases unused resources. If the base station 20 accepts the interference reduction request from the base station 10 without limitation, the amount of free resources may increase, reducing usage efficiency of resources considerably. The base station 20 thus sets the upper limit on the number of interference reduction resources. When the number of unused resources exceeds the limit, the base station 20 does not allocate another interference reduction resource, and performs resource assignment to the other mobile stations in the usual way. This enables the base station 20 to maintain a certain interference reduction function, to reduce the influence of the increase in interference reduction resources on the other mobile stations, and also to reduce the decrease in the usage efficiency of radio resources. This allows effective use of limited resources.

As described above, the radio communication system 1 according to the present embodiment includes the base station 10 and the base station 20 that communicate with the mobile station 30. The base station 10 includes the network terminal unit 13. The network terminal unit 13 transmits a result of resource assignment relative to the mobile station 30 to the base station 20. In other words, the base station 10 provides to the base station 20, notification of a result of the audio scheduling with which resources used by the base station 10 in audio data reception from the mobile station 30 are identifiable, as a interference reduction request. The base station 20 includes a network terminal unit 23 and a scheduling unit 24. The network terminal unit 23 receives the result of the resource assignment performed by the base station 10 and transmitted by the network terminal unit 13. The scheduling unit 24 identifies a resource suffering interference from the mobile station 30 among resources assignable by the base station 20 based on the result of the resource assignment and stops assignment of the resource relative to the mobile station 30.

In such a manner, the base station 20 does not assign resources causing interference to the mobile station 30 when the base station 10 receives audio data from the mobile station 30. The interference from the mobile station 30 to the base stations 10, 20 thus decreases simply and surely. As a result, the interference between cells can be reduced while the coverage is extended.

### Second Embodiment

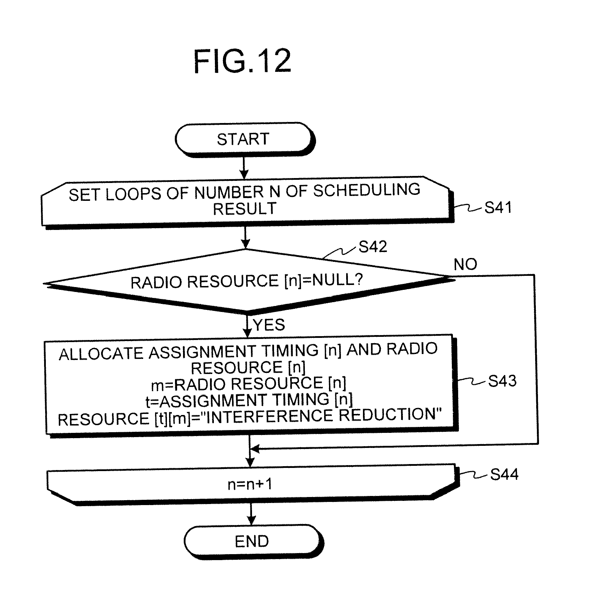

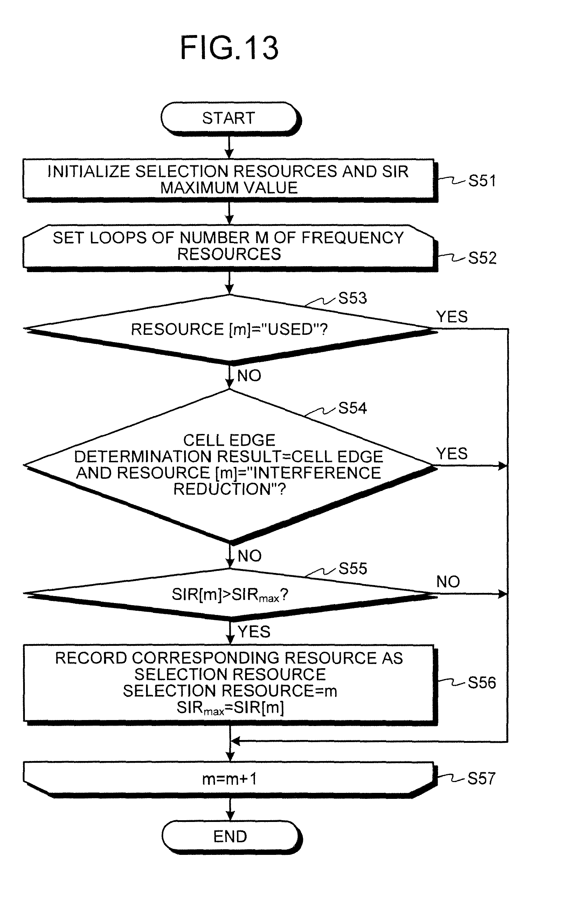

The following describes a second embodiment. The configuration of a radio communication system according to the second embodiment is similar to that of the radio communication system according to the first embodiment illustrated in FIG. 1. The configurations of two base stations according to the second embodiment are similar to those of the two base stations 10, 20 according to the first embodiment illustrated in FIG. 2. In the second embodiment, the components common to the first embodiment employ like reference numerals, and the detailed description thereof is omitted. The second embodiment is different from the first embodiment in that the base station 20 assigns resources determined not to be assigned to the mobile station 30, to another mobile station positioned near the center of the cell C2. The following describes such operation of the base stations 10, 20 according to the second embodiment with reference to FIGS. 12 and 13 with an emphasis on the difference from the first embodiment.

FIG. 12 is a flowchart for explaining marking processing of a target resource for interference reduction, executed by the base station 20 according to the second embodiment. The processing illustrated in FIG. 12 is the same with the processing illustrated in FIG. 9 referred in the description of the operation according to the first embodiment except for the processing at S43. Like reference numeral endings are thus attached to the common steps, and the detailed description thereof is omitted. More specifically, steps S41, S42, and S44 in FIG. 12 correspond to steps S31, S32, and S34 in FIG. 9, respectively.

At S43 in FIG. 12, the DSP 20c allocates the assignment timing [n] and the radio resource [n] and sets "m" in the radio resource [n] and "t" in the assignment timing [n] to update the usage condition of the resource [t][m] to "interference reduction". In response to the reception of the interference reduction request from the base station 10, the base station 20 executes processing (marking processing) to represent target resources for interference reduction as targets for interference reduction.

In the scheduling of resources for a mobile station other than the mobile station 30, the base station 20 can employ, for example, a method for preferentially assigning resources with a high signal to interference ratio (SIR) to implement interference reduction more effectively. FIG. 13 is a flowchart for explaining assignment processing of the target resource for interference reduction to another mobile station to which the method is applied.

At S51, the DSP 20c initializes parameters (selection resources and the maximum value of an SIR). This sets the null value (invalid value) in a selection resource as a scheduling result and "-∞" in the maximum value SIRₘₐₓ of the SIR, each as its initial value. The SIRₘₐₓ is a variable, and its initial value is set to the minimum value (-∞) with which no radio resource can take. At S52, the DSP 20c sets the number of frequency resources in the number M of loops. This sets loops of m = 0 to M - 1. At S53, the DSP 20c determines the resource usage condition at the resource [m] to determine whether the resource is already used, and if the condition is "unused" (No at S53), the system shifts to processing at S54. In contrast, as a result of the determination at S53, if the resource [m] is "used" (Yes at S53), the DSP 20c removes the resource [m] from the target for scheduling and increments the value of m by 1 to shift to the subsequent resource determination (S57).

At S54, the DSP 20c determines whether the mobile station that is a candidate for a resource assignment target is positioned at the edge of the cell C2 and whether the resource [m] is set as a target resource for "interference reduction". If at least either one of the two conditions is not satisfied (No at S54), the DSP 20c compares the value of an SIR [m] as the SIR of the resource [m] with the current SIRₘₐₓ value (S55). As a result of the comparison, if SIR [m] value > SIRₘₐₓ value is satisfied (Yes at S55), the DSP 20c records in a memory 20e, the resource (corresponding resource) meeting the conditions described at S53 to S55 as a selection resource (S56). This sets in the base station 20, "m" as a selection resource assigned to the mobile station positioned near the center of the cell C2, and the SIR [m] as the SIRₘₐₓ. As a result, the SIRₘₐₓ value is updated to the SIR value of the corresponding resource. The resource finally selected at S56 is scheduled as a resource with the maximum SIR among resources capable of being scheduled by the base station 20. In the processing at S56, the selection resource is only recorded as a target resource for interference reduction and is not allocated as a radio resource at this point in time.

After the completion of the processing at S56, the DSP 20c increments the current value of m by 1 to make m = m + 1 (S57). When a series of processing from S52 to S57 has been repeatedly executed m times, the marking processing described above ends.

Even if both of the conditions described at S54 are positive (Yes at S54) or if SIR [m] value ≤ SIRₘₐₓ value is satisfied as a result of the determination at S55 (No at S55), the DSP 20c omits the processing at S56 and executes the processing at S57. In other words, the DSP 20c determines not to target the radio resource [m] for scheduling and increments the value of m by 1 to shift to the subsequent resource determination (S57).

As described above, the base station 20 includes a receiving unit 22 and the scheduling unit 24. The receiving unit 22 determines whether a mobile station other than the mobile station 30 is positioned at the edge of the cell C2 formed by the base station 20. When the receiving unit 22 determines that the mobile station is not positioned at the edge of the cell C2, the scheduling unit 24 assigns the identified resource to the mobile station. In the first embodiment, the base station 20 does not use the resource requested for interference reduction from the base station 10 and thus reduces the interference from the mobile station 30. The first embodiment enables the interference to be reduced most simply and surely but disadvantageously produces a large number of unused resources, leading to low usage efficiency of resources. In other words, when the base station 20 determines not to use specific resources, despite that the resources could have been assigned to the other mobile station under normal circumstances, free resources are produced. This is not preferable in view of usage efficiency. To meet this disadvantage, in the radio communication system 1 according to the second embodiment, the base station 20 performs assignment to apply the corresponding resource determined to be unused to a mobile station (mobile station not positioned at the edge of the cell C2, for example) having no interference on the base station 10. This enables the base station 20 to put radio resources to efficient use. The radio communication system 1 can thus reduce the interference between the cells and enhance the usage efficiency of radio resources at the same time.

More precisely, when executing scheduling processing on each timing, the base station 20 does not assign target resources for interference reduction to the mobile station positioned at the cell edge and assigns the resources to the mobile station not positioned at the cell edge, by using the cell edge determination result of each mobile station. The present embodiment is described by assuming that: the base station 20 has selected a destination mobile station; and a method for preferentially assigning resources with high SIR to the mobile station is employed. The method for executing the scheduling processing by the base station 20 is, however, not limited to such a method. Examples of the method include a method in which the base station 20 assigns resources to a mobile station providing the maximum scheduling metric, out of all mobile stations in the cell C2, by comparing the scheduling metric for each resource. Examples of the method also include a method in which the base station 20 selects a plurality of mobile stations to which transmission is performed on a given timing and compares the scheduling metric among the selected mobile stations.

### Third Embodiment

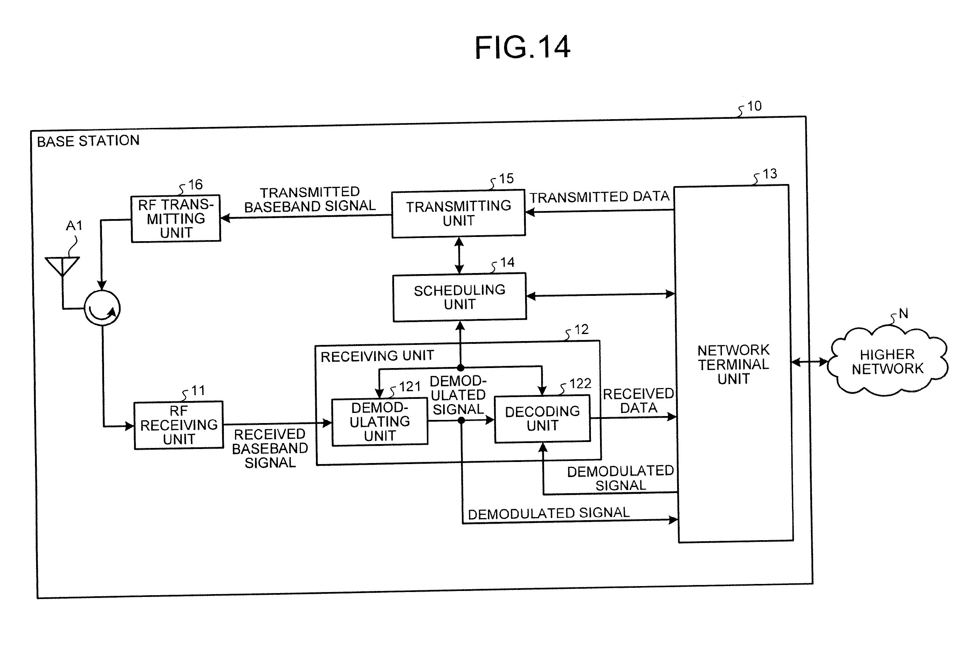

The following describes a third embodiment. The configuration of a radio communication system according to the third embodiment is similar to that of the radio communication system 1 of the first embodiment illustrated in FIG. 1. The configuration of base stations according to the third embodiment is similar to that of the base stations according to the first embodiment illustrated in FIG. 2 except for the receiving unit 12 of the base station 10. In the third embodiment, the components common to the first embodiment employ like reference numerals, and the detailed description thereof is omitted. The third embodiment is different from the first embodiment in that the base stations 10, 20 perform cooperative reception of audio data transmitted from the mobile station 30. The following describes such configuration and operation of the base station 10 according to the third embodiment with reference to FIGS. 14 to 16 with an emphasis on the difference from the first embodiment.

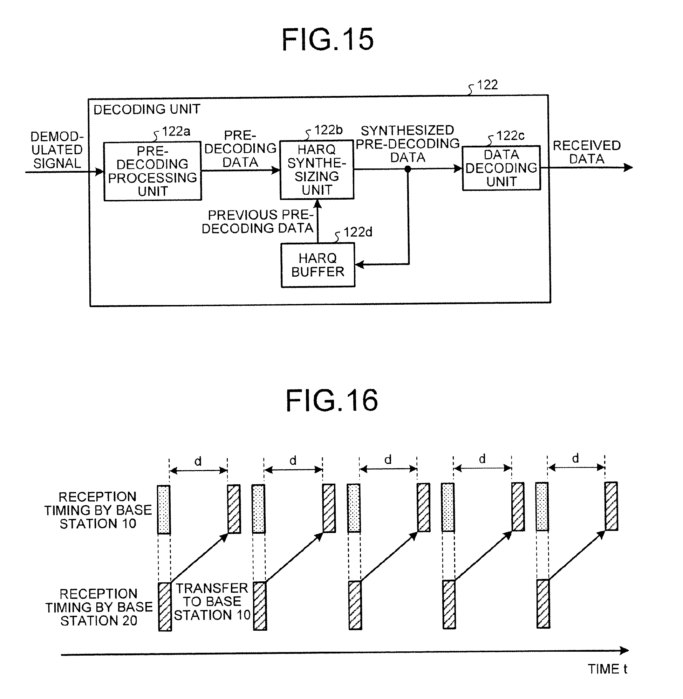

FIG. 14 is a block diagram illustrating the functional configuration of the base station 10 according to the third embodiment. As illustrated in FIG. 14, the receiving unit 12 of the base station 10 according to the third embodiment includes a demodulating unit 121 and a decoding unit 122. The demodulating unit 121 inputs a received baseband signal from the RF receiving unit 11 and outputs a demodulated signal to the decoding unit 122. FIG. 15 is a block diagram illustrating the configuration of the decoding unit 122 of the base station 10 according to the third embodiment. As illustrated in FIG. 15, the decoding unit 122 includes a pre-decoding processing unit 122a, a hybrid automatic repeat request (HARQ) synthesizing unit 122b, an HARQ buffer 122d, and a data decoding unit 122c. These components are connected to enable input and output of signals and data unidirectionally or bidirectionally.

The pre-decoding processing unit 122a receives the demodulated signal received from the network terminal unit 13 and determines the reception completion state of the corresponding user process. When the reception is already completed, the pre-decoding processing unit 122a does not execute pre-decoding processing and abandons the received data. As a result of the determination, when the reception is not completed, the pre-decoding processing unit 122a executes proper pre-decoding processing such as de-rate matching on the received demodulated signal to convert the demodulated signal into pre-decoding data. The HARQ synthesizing unit 122b synthesizes the pre-decoding data input from the pre-decoding processing unit 122a and past (previous) pre-decoding data corresponding to the data. The data decoding unit 122c receives the synthesized pre-decoding data from the HARQ synthesizing unit 122b and decodes the data. Confirming normal decoding through cyclic redundancy check (CRC) determination on the decoded data, the data decoding unit 122c outputs the data to the network terminal unit 13 as received data. The network terminal unit 13 then transmits the received data to the higher network N. When the result of the CRC determination is not good, the data decoding unit 122c causes the HARQ buffer 122d to temporarily store the synthesized pre-decoding data input in the data decoding unit 122c to use it in retransmission from the next time.

The base station 20 receives data in a manner similar to the base station 10 in resources requested for interference reduction from the base station 10. The base station 10 synthesizes the received data and data received by the base station 10 itself, thereby further enhancing reception properties of the mobile station 30 positioned at the cell edge. More precisely, in the transmission of an interference reduction request to the base station 20, the DSP 10c of the base station 10 adds a parameter requested for data reception, such as a pilot sequence number or a modulation system and causes the higher network terminal NPU 10a to transmit it together with the request. The DSP 20c of the base station 20 receives data from the corresponding resource by using the parameter specified in the interference reduction request. The DSP 20c transmits a demodulated signal obtained from the received data to the base station 10 via the higher network terminal NPU 20a.

More specifically, the DSP 20c executes the marking processing (see FIG. 12) on target resources for interference reduction to record timing to execute interference reduction and radio resources as the targets in the memory 20e. When radio resources requiring interference reduction exist on each timing of executing scheduling processing, the DSP 20c then sets data reception by using the corresponding resource together with the parameter specified in the interference reduction request. An RF circuit 20d receives data by using the corresponding resource in a manner similar to data reception by using normal resources but does not decode this data and transfers the pre-decoding demodulated signal to the base station 10. In response to the reception of the demodulated signal, the DSP 10c of the base station 10 synthesizes the signal and pre-decoding data received by the base station 10 itself and then executes decoding processing. The DSP 10c performs the CRC determination mentioned above on the decoded data and then outputs the data as received data to the higher network terminal NPU 10a. The higher network terminal NPU 10a transmits the input received data to the higher network N.

Because the radio communication system 1 according to the third embodiment is involved in communication between base stations, delay is assumed to occur in timing on which the base station 10 receives demodulated signals from the base station 20 via the higher network terminal NPU 10a. FIG. 16 is a graph illustrating a situation in which the reception timings of demodulated signals delay, in the base station 10 according to the third embodiment. As illustrated in FIG. 16, network delay d occurs intermittently between reception timing of demodulated signals by the base station 10 and reception timing of the demodulated signals by the base station 20 due to transfer of the demodulated signals from the base station 20 to the base station 10. The DSP 10c of the base station 10, however, asynchronously executes a series of processing from the reception to the synthesis and decoding of a demodulated signal, in response to the reception of the demodulated signal from the base station 20. The base station 10 can thus complete the reception of audio data transmitted from the mobile station 30 while suffering little influence of the network delay d.

As described above, the network terminal unit 13 of the base station 10 transmits to the base station 20, information (a parameter such as a pilot sequence number or a modulation system) used when the base station 20 receives data in the resource. The receiving unit 22 of the base station 20 receives data transmitted from the mobile station 30 in the resource, by using the information transmitted from the network terminal unit 13 of the base station 10. The base station 20 further includes the network terminal unit 23 that transmits the data to the base station 10. The base station 10 further includes the receiving unit 12 that synthesizes data transmitted from the mobile station 30 and the data transmitted from the network terminal unit 23 of the base station 20 and receives the data.

In other words, in the radio communication system 1 according to the third embodiment, the base station 10 receives audio data from the mobile station 30 positioned at the edge of the cell C1. Immediately after that, the base station 10 provides notification of the audio scheduling result as an interference reduction request to the base station 20. Together with this notification, the base station 10 transmits to the base station 20 in advance, a parameter used for the base station 20 to receive the audio data from the mobile station 30. The base station 20 having received the interference reduction request uses the parameter to receive the audio data from the mobile station 30 to which the corresponding resource is assigned, and then transmits (provides feedback of) the reception result to the base station 10. The base station 10 then synthesizes the audio data directly received from the mobile station 30 and the audio data indirectly received from the mobile station 30 via the base station 20 for reception. The base station 10 uses the base station 20 as a substitute for the base station 10 and causes the base station 20 to receive audio data that is originally supposed to be received by the base station 10 itself, thereby enabling cooperative data reception with the base station 20. The base station 20 can also use resources that are originally supposed not to be used to reduce the interference from the mobile station 30, in the audio data reception from the mobile station 30. This allows effective use of free resources, which results in further enhancement of the capacity efficiency through the cooperative reception.

The embodiments and modifications employ transmission loss as a method with which the base station 10 determines the presence or absence of the mobile station 30 at the edge of the cell C1, but this is not a limiting example. The DSP 10c of the base station 10 may determine the presence or absence by using timing information such as timing advance (TA), based on the magnitude of the amount of delay, for example, by determining the mobile station with a large amount of delay as a mobile station positioned at the cell edge. The DSP 10c of the base station 10 may also compare the RSRP informed from the mobile station 30 between the base station 10 and the neighboring base station 20. When the difference is smaller than a given threshold T₄, the mobile station 30 may be determined to be positioned at the edge of the cell C1. The DSP 10c may thus determine the presence or absence based on the magnitude of the difference of the RSRP of each of the base stations 10, 20.

The embodiments and modifications describes, as an example, the radio communication system 1 to which the LTE is applied, but this is not a limiting example. The radio communication system to be applied may be, for example, a system performing resource assignment by time sharing, such as high speed downlink packet access (HSDPA).

The configuration and operation of each of the embodiments are individually described above. However, the radio communication system 1 according to each embodiment may include components specific to the other embodiments and the modifications. The combination of each of the embodiments and the modifications is not limited to the combination of two of them, and any embodiments are applicable, such as the combination of three of them. For example, the base station 10 according to the second or the third embodiment may execute the base station determination processing for interference reduction described above in a manner similar to the first modification. The base station 20 according to the first modification may have the interference reduction feasibility determination function specific to the second modification. Furthermore, a single radio communication system may include the components described in the first to the third embodiments and the first and the second modifications all together.

The mobile station in each of the embodiments is described by assuming it to be a cellular phone, a smartphone, or a personal digital assistant (PDA), but the present invention is not limited to the mobile station and is applicable to various types of communication equipment communicating with the base station.

Each of the components of the base stations 10, 20 is not necessary physically configured as illustrated in the drawings. More precisely, specific distributed or integrated embodiment of each of the devices is not limited to the drawings. The whole of or the part of the embodiment may be distributed or integrated functionally or physically in any units according to various kinds of loads, the usage condition, or other conditions. For example, the transmitting unit 15 and the RF transmitting unit 16 of the base station 10 or the receiving unit 12 and the transmitting unit 15 of the base station 10 may be integrated as a single component. The receiving unit 12 and the transmitting unit 15 both of which control radio communication, and the network terminal unit 13 that controls wire communication may be a single communicating unit. In contrast, the scheduling unit 14 may be distributed into a part executing audio scheduling processing and a part determining the presence or absence of a mobile station at the cell edge. The receiving units 12, 22 may be each distributed into a data receiving function and a cell edge determining function. Furthermore, the memories 10e, 20e may be connected as external devices of the base stations 10, 20 via a network or a cable, respectively.

### [Explanation of Reference]

1 radio communication system
10, 20 base station
10a, 20a higher network terminal NPU
10b, 20b CPU
10c, 20c baseband processing DSP
10d, 20d RF circuit
10e, 20e memory
11, 21 RF receiving unit
12, 22 receiving unit
121 demodulating unit
122 decoding unit
122a pre-decoding processing unit
122b HARQ synthesizing unit
122c data decoding unit
122d HARQ buffer
13, 23 network terminal unit
14, 24 scheduling unit
15, 25 transmitting unit
16, 26 RF transmitting unit
30 mobile station
A1 antenna
C1, C2 cell
d network delay
m frequency
M the number of frequency resources
N higher network
r the number of interference reduction resources
r0, r21, r40 free resource
R radio resource
T assignment timing
T₁, T₂, T₃, T₄ threshold
T_{SCD} scheduling period
T_{AMR} interval of audio frame
T_{ON} allowable delay

## Claims

1. A radio communication system comprising:
a first base station that communicates with a mobile station; and
a second base station, wherein
the first base station includes
a transmitting unit that transmits a result of resource assignment relative to the mobile station to the second base station; and
the second base station includes
a receiving unit that receives the result of the resource assignment performed by the first base station and transmitted by the transmitting unit, and
a controller that identifies a resource suffering interference from the mobile station among resources assignable by the second base station based on the result of the resource assignment and stops assignment of the resource relative to the mobile station.

2. The radio communication system according to claim 1, wherein
the second base station further includes a determining unit that determines whether the mobile station is positioned at an edge of a cell formed by the second base station, and
the controller assigns the identified resource to the mobile station when the determining unit determines that the mobile station is not positioned at the edge of the cell.

3. The radio communication system according to claim 1, wherein
the transmitting unit of the first base station transmits information used when the second base station receives data by the resource to the second base station,
the receiving unit of the second base station receives the data transmitted from the mobile station by the resource, by using the information transmitted by the transmitting unit of the first base station,
the second base station further includes a transmitting unit that transmits the data to the first base station, and
the first base station further includes another receiving unit that synthesizes other data transmitted from the mobile station and the data transmitted by the transmitting unit of the second base station and receives the synthesized data.

4. A base station that communicates with a first base station communicating with a mobile station, the base station comprising:
a receiving unit that receives a result of resource assignment relative to the mobile station performed by the first base station from the first base station; and
a controller that identifies a resource suffering interference from the mobile station among resources assignable by the base station based on the result of the resource assignment and stops assignment of the resource relative to the mobile station.

5. A radio communication method in a radio communication system including a first base station that communicates with a mobile station and a second base station, the radio communication method comprising:
transmitting by the first base station, a result of resource assignment relative to the mobile station to the second base station;
receiving by the second base station, the result of the resource assignment performed by the first base station, from the first base station; and
identifying by the second base station, a resource suffering interference from the mobile station among resources assignable by the second base station based on the result of the resource assignment and stops assignment of the resource relative to the mobile station.
